# EUROPEAN PATENT APPLICATION

(11) **EP 4 471 460 A1**
(43) Date of publication of application: **04.12.2024**
(21) Application number: 22924281.3
(22) Date of filing: 28.03.2022
(51) Int. Cl.: G01S 17/88, G01S 13/88, G01C 21/34, B60W 30/10, B60W 50/14, B60W 60/00

(54) **METHOD FOR PROVIDING 3D VISIBILITY INFORMATION AND METHOD FOR GENERATING VISIBILITY MODEL THEREFOR**

(30) Priority: 28.01.2022 KR 20220012996; 28.01.2022 KR 20220012997
(71) Applicant: Ezdetector Co., Ltd., Busan 48513 (KR)
(72) Inventor: LEE, Hanna, Busan 48096 (KR)
(74) Representative: Studio Torta S.p.A.
(86) International application number: PCT/KR2022/004352
(87) International publication number: WO 2023/146023

(57) **Abstract**

The present invention provides a method comprising steps of: (a1) when a transceiving device 10 radiates electromagnetic waves in all three-dimensional directions and receives a back signal, acquiring, by a back signal information acquisition module (111) electrically connected thereto, back signal information (L(s)) for each position coordinates (s) within a preset three-dimensional limit range; (b1) acquiring, by a visibility information acquisition module 113, actual visibility information at a position of the transceiving device 10; and (c1) generating, by a visibility model generation module 114, a visibility model by using the back signal information (L(s)) for each position coordinates (s) acquired in the step (a1) as an input variable and using the visibility information acquired in the step (b1) as an output variable, and provides a method for providing visibility information considering the position and the direction by using the above method.

## Description

### Technical Field

The present invention relates to a convergence technology of transceiving devices such as Lidars and Radars, atmospheric science and artificial intelligence, and specifically, to a technology for providing accurate visibility information by processing information on signals confirmed through the transceiving devices with learning algorithms of machine learning and artificial intelligence and applying the result to the atmospheric science.

### Background Art

By visibility, it means the maximum visible distance at which an object or light is visible. Visibility becomes shorter when there is fog or a lot of air pollutants.

It is important information for safe driving of high-speed mobility. In particular, it is used as an important indicator to determine whether an aircraft will operate, take off or land.

Generally, the visibility measurements are made by humans. At the airport, a flag, which is an object for measuring visibility, is installed at a height of 2.5 m near the runway, and a professional observer observes it to determine and report visibility.

Visibility can also be measured using an instrument such as a visibility meter. The visibility meter obtains, through a camera, an image including an object for visibility measurement, and then computes the visibility based on a degree of clarity of the object confirmed in the image. Artificial intelligence may also be applied.

Korean Patent No. 10-1912874 discloses a technology for measuring visibility using light irradiation. In this Korean patent, the visibility detection unit radiates light, receives and analyzes scattered light to compute a degree of visibility reduction.

The visibility in all related technologies described above has the following problems in common.

First, there is no directionality in visibility measurements. The visibility at a specific position may vary depending on the direction (e.g., visibility to the north is 8 km, while visibility to the west is 5 km), but the visibility information measured according to the related art only represents the visibility at the corresponding position and does not take direction into account. For the aircraft or automobile that determines a route solely based on the visibility information without considering directions, it is not possible to determine which direction to take to improve the visibility, or how to determine the route in consideration of the visibility. The safety of mobilities capable of autonomous driving can be greatly affected in low visibility conditions because the uncertainty in autonomous driving increases significantly due to the performance degradation of sensors. For this reason, whether the car is driven autonomously or driven by a human, it is necessary to find a road with good visibility and operate on a safe road.

Second, visibility is measured only close to the ground. It is necessary for the aircraft to check visibility at certain high altitudes especially during takeoff and landing, but the current visibility information only reflects visibility at the ground level and does not include directional visibility by altitude.

Third, the method of visibility measurement using light irradiation determines visibility by the degree of atmospheric scattering and absorption using light transmission at one position or two points at a close distance, and accordingly, there may be a problem of determining that visibility is good even though there is rapidly generated fog hundreds of meters away from the point-based visibility instrument and the visibility is deteriorating in the area where the fog is generated, because the point-based or light-transmission type visibility measuring instrument is not affected by the fog in its position. That is, it is not possible to reflect the spatial unevenness of visibility.

### Detailed Description of Invention

### Technical Problem

The present invention has been devised to solve the problems described above.

Specifically, it is intended to solve the problem of low accuracy and inability to consider directions when computing the visibility information using the existing method.

### Technical Solution

In order to solve the problems described above, there is provided a method for generating a visibility model using a transceiving device 10 and computing visibility information using the visibility model, wherein the transceiving device irradiates electromagnetic waves into the atmosphere and receives a back signal returned from substances in the atmosphere, in which back signal information (L(s)) includes the intensity of the back signal at position coordinates (s), and the position coordinates (s) are three-dimensional coordinates divided into preset unit values, and the method includes steps of (a1) when the transceiving device 10 radiates the electromagnetic waves in all three-dimensional directions and receives a back signal, acquiring, by a back signal information acquisition module (111) electrically connected thereto, back signal information (L(s)) for each position coordinates (s) within a preset three-dimensional limit range, (b1) acquiring, by a visibility information acquisition module 113, actual visibility information at a position of the transceiving device 10, and (c1) generating, by a visibility model generation module 114, a visibility model by using the back signal information (L(s)) for each position coordinates (s) acquired in the step (a1) as an input variable and using the visibility information acquired in the step (b1) as an output variable.

In addition, it is preferable that the transceiving device 10 is a Lidar device and the back signal is a backscattered signal, or the transceiving device 10 is a Radar device and the back signal is an echo signal.

In addition, the step (a1) preferably further includes (a11) acquiring, by the back signal information acquisition module 111, an intensity of the back signal included in the back signal information (L(s)) for each position coordinates (s), and (a12) computing, by the back signal information acquisition module 111, a light extinction coefficient, an aerosol extinction coefficient, and a polarization signal using the acquired back signal, wherein the computed light extinction coefficient, aerosol extinction coefficient, and polarization signal are included in the back signal information (L(s)).

In addition, after the step (a1), the method preferably further includes (a2) acquiring, by a weather information acquisition module 112, weather information on a position of the transceiving device 10, the step (c1) preferably further includes (c2) generating. by the visibility model generation module 114, a visibility model by using the back signal information (L(s)) for each position coordinates (s) acquired in the step (a1) and the weather information acquired in the step (a2) as input variables and using the visibility information acquired in the step (b1) as an output variable.

In addition, the transceiving device 10 preferably includes a Doppler transceiving device that detects wind direction and speed and a telemetry transceiving device that remotely measures temperature and humidity, the weather information preferably includes temperature, humidity, and wind direction and speed, and the temperature, humidity, and wind direction and wind speed are preferably confirmed from a weather information database 220, or confirmed from a weather station, or confirmed from a telemetry transceiving device and a Doppler transceiving device.

In addition, after the step (c1), the method preferably includes (d1) when one or more of the transceiving devices 10 irradiate the electromagnetic waves in all three-dimensional directions and receive a back signal, acquiring, by a back signal information acquisition module (111) electrically connected thereto, back signal information (L(s)) for each position coordinate (s) within a preset three-dimensional limit range, (e1) when reference coordinates (s0) and a direction (D) are input to a visibility information computation module 121, confirming, by a position coordinate confirmation module 122, a plurality of position coordinates (s) to pass while advancing, starting from the reference position (s0), in the input direction (D), (f1) confirming, by the visibility information computation module 121, back signal information (L(s)) corresponding to each of the plurality of position coordinates (s) confirmed in the step (e1), and (g1) additionally inputting, by the visibility information computation module 121, the back signal information (L(s)) confirmed in the step (f1) into the visibility model generated in the step (c1), thereby computing visibility information for the input reference coordinates (s0) in the input direction (D).

In addition, the method preferably includes, (A) when a route (P) and a route direction (Dp0) are input to a route data computation module 131, confirming, by the route data computation module 131, route position coordinates (Sp) forming the route (P) and confirming a movement direction (Dp) in each route position coordinates (Sp) by further using the input route direction (Dp0), thereby confirming the route position coordinates (Sp) and the movement direction (Dp), and (B) computing, by the visibility information computation module 121, the visibility information using the route position coordinates (Sp) as the reference coordinates (s0) in each route position coordinates (Sp) and using the movement direction (Dp) as the direction (D), thereby computing the visibility information at each route position coordinates (Sp) included in the route (P) and providing the result.

In addition, after the step (B), the method preferably further includes (C1) outputting, by the output module 132, the route (P) together with the visibility information at each route position coordinates (Sp) confirmed in the step (B).

In addition, after the step (B), the method preferably further includes (C2) determining, by the low visibility warning module 132, whether a value of the visibility information at each route position coordinates (Sp) confirmed in the step (B) is equal to or less than a preset lower limit, and when it is determined to be equal to or less than the preset lower limit, warning, by the output module 133, of low visibility for the route position coordinates (Sp) corresponding thereto.

In addition, the route data computation module 131, the low visibility warning module 132, and the output module 133 are preferably provided in the mobility 30, the mobility 30 preferably includes an autonomous driving function, and the step (C2) preferably further includes (C21) determining, by the low visibility warning module 132, whether a value of the visibility information at each route position coordinates (Sp) confirmed in the step (B) is equal to or less than the preset lower limit, and if it is determined to be equal to or less than the lower limit, warning, by the output module 133, of an autonomous driving error for the corresponding route position coordinates (Sp).

In addition, the mobility 30 preferably includes a navigation system 20, the step (A) preferably includes (A1) computing, by the navigation system 20, two or more routes (P) and the route direction (Dp0), and inputting the route (P) and the route direction (Dp0) to the route data computation module 131, and the step (B) preferably includes (B 1) computing, by the visibility information computation module 121, the visibility information in the route position coordinates (Sp) included in each of the two or more routes (P),

In addition, after the step (B1), the method preferably includes (C3) determining, by the low visibility warning module 132, whether the value of the visibility information at each route position coordinates (Sp) for each of the two or more routes (P) confirmed in the step (B 1) is equal to or less than the preset lower limit, and outputting, by the output module 133, a route including the route position coordinates (Sp) confirmed to be equal to or less than the preset lower limit as a low visibility route.

### Effects of Invention

By applying the method according to the present invention, the visibility information considering both position and direction can be provided with high accuracy. Additionally, it is possible to provide new visibility information whenever the position and direction of a relatively short interval unit change.

### Brief Description of Drawings

FIG. 1 is a schematic diagram showing a system for carrying out a method according to the present invention.
FIG. 2 is a schematic diagram showing the system shown in FIG. 1 in more detail.
FIG. 3 is a conceptual diagram provided to explain an example of a method of a transceiving device for irradiating electromagnetic waves.
FIG. 4 is a conceptual diagram provided to explain a method for computing the visibility information along a specific direction (D) by performing the method according to the present invention.
FIG. 5 is a diagram provided to explain a visibility model, which is a learning model for performing the method according to the present invention.
FIG. 6 illustrates an example provided to explain the method according to the present invention.
FIG. 7 is a diagram provided to explain the application of the method according to the present invention.

### Mode for Embodying Invention

Hereinafter, a "transceiving device" refers to a device that can radiate electromagnetic waves, receive back signals that are reflected or scattered from the substances in the air, analyze the signals and confirm, for example, the intensity of the back signals. The transceiving device may be a Lidar device or a Radar device. The Lidar device will receive backscattered signals and can analyze information based on the intensity of the received signals. The Radar device will receive echo signals and can analyze information based on the echo signals.

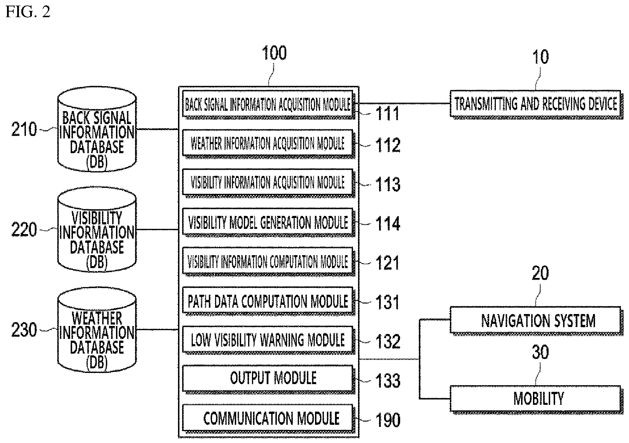

Hereinafter, "position coordinates (s)" refers to a three-dimensional position and can be expressed in three-dimensional coordinates. For example, it may be expressed as s = x, y, z. Reference coordinates (so) and route position coordinates (sp) may also be expressed in three-dimensional coordinates. When expressed in three-dimensional coordinates, the coordinates may be expressed at regular intervals based on a preset unit value. For example, they may be expressed at 100 m intervals, so that the sum of each position coordinates (s) is expressed as a 100 m unit grid (see FIG. 2).

Hereinafter, "direction (D)" refers to a direction toward a specific position in specific position coordinates (s) and may be expressed as a three-dimensional azimuth in a three-dimensional coordinates system. For example, they may be expressed as D = θx, θy, θz. Likewise, a movement direction (Dp) may also be expressed as the three-dimensional azimuth.

Hereinafter, "back signal information (L(s))" refers to information confirmed through the transceiving device at specific position coordinates (s). For example, this information may include the intensity of the back signal confirmed at the transceiving device. In addition, when the transceiving device is a Lidar device, the information may further include a light extinction coefficient, an aerosol extinction coefficient, and a polarization signal, which may be computed using a backscattering signal which is the back signal. Meanwhile, instead of computing using the information confirmed at the transceiving device, it is possible to compute and confirm the light extinction coefficient, the aerosol extinction coefficient, and the polarization signal with another method, such as directly using a separate measuring device for confirming, and in this case as well, it is noted that the light extinction coefficient, the aerosol extinction coefficient, and the polarization signal are included in the back signal information (L(s)).

Hereinafter, "weather information" refers to information that may be used in computing the visibility information together with back signal information (L(s)) and may include temperature, humidity, wind direction, wind speed, etc. The weather information may be confirmed from a weather information database provided by the Korea Meteorological Administration, or confirmed from a weather station located near the transceiving device, or the transceiving device may further include a Doppler transceiving device and a telemetry transceiving device where the weather information may be confirmed.

Hereinafter, "the visibility information" refers to a maximum visible distance at which the object or light may be seen, and this information is based on the unit of distance. General visibility information does not include the concept of direction (D) (e.g., visibility at Incheon Airport is 1 km), but the visibility information in the present invention includes a specific altitude and a specific direction (D) based on specific position coordinates (s) (e.g., visibility of 1 km is at an altitude of 1 km in the east direction from Incheon Airport).

Hereinafter, the "mobility" refers to any object that can move, and may include vehicles such as cars and motorcycles as well as aircraft, for example. It may include urban air mobility (UAM).

Hereinafter, the present invention will be described in detail with reference to the drawings.

### 1. Description of System

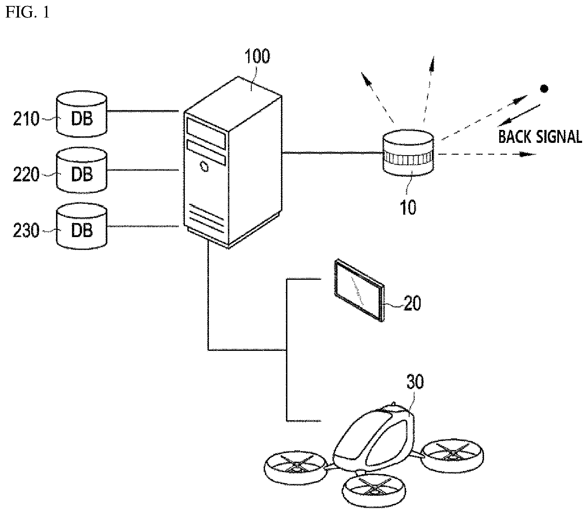

A system for performing the method according to the present invention will be described with reference to FIGS. 1 and 2.

As shown in FIG. 1, the system for performing the method according to the present invention includes a control unit 100 electrically connected to the transceiving device 10, a back signal information database 210, a visibility information database 220, and a weather information database 230. The control unit and the databases 210, 220, and 230 may be provided at the same position as the transceiving device 10 and in the same device, but may also be located separately from each other.

The transceiving device 10 radiates electromagnetic waves into the atmosphere and receives back signals returned by reflection or scattering from the substances in the atmosphere. The substance in the atmosphere refers to all types of substances present in the atmosphere, such as atmospheric molecules and atmospheric pollutants, which reflect or scatter the electromagnetic waves radiated from the transceiving device 10.

The transceiving device 10 acquires the back signal information (L(s)) as learning data for generating a visibility model, and after the visibility model is generated, may also acquire the back signal information (L(s)) as actual data for computing visibility information for a specific position and specific direction. One transceiving device 10 may perform both functions, or the functions may be performed by separate devices. That is, the transceiving device 10 for generating the visibility model and the transceiving device 10 for acquiring the current back signal information (L(s)) to compute actual visibility information after the visibility model is generated may be the same or may be separate devices.

One or more transceiving devices 10 may be used. As will be described below, a limit range (e.g., the maximum value of the three-dimensional grid in FIG. 2) may be set for each transceiving device 10, and if multiple transceiving devices 10 are utilized, the limit range will increase depending on the number and position thereof.

The control unit 100 acquires the back signal received from the transceiving device 10 and, based on this, acquires the back signal information (L(s)) for each position coordinates (s). In addition, the visibility model is generated with the acquired information, and the generated visibility model is further utilized to compute the visibility information on a specific position coordinates (s) in a specific direction (D). The method will be described in detail below.

The control unit 100 is electrically connected to a separate navigation system 20 or the mobility 30 to enable wireless communication, so as to transmit the visibility information computed by the control unit 100 to the navigation system 20 or the mobility 30.

As shown in FIG. 2, the control unit 100 includes a back signal information acquisition module 111, a weather information acquisition module 112, a visibility information acquisition module 113, a visibility model generation module 114, a visibility information computation module 121, a route data computation module 131, a low visibility warning module 132, an output module 133, and a communication module 190. The functions of each module are described together in describing the method that will be described below.

The navigation system 20 refers to a terminal that implements all types of navigation programs that can output both the current position and a map.

The navigation system 20 may be provided in the mobility 30. Accordingly, when the mobility 30 receives the visibility information, the navigation system 20 provided in the mobility 30 may receive the visibility information. Of course, the control unit (not shown) of the mobility 30, which controls various operations of the mobility 30, may receive and utilize the visibility information.

Meanwhile, some of the modules shown as included in the control unit 100 may also be provided in the navigation system 20 or the mobility 30. For example, in FIG. 2, the route data computation module 131, the low visibility warning module 132, and the output module 133 are shown as being included in the control unit 100, but they may be positioned in the navigation system 20 or the mobility 30.

### 2. Description of Method For Generating Visibility Model

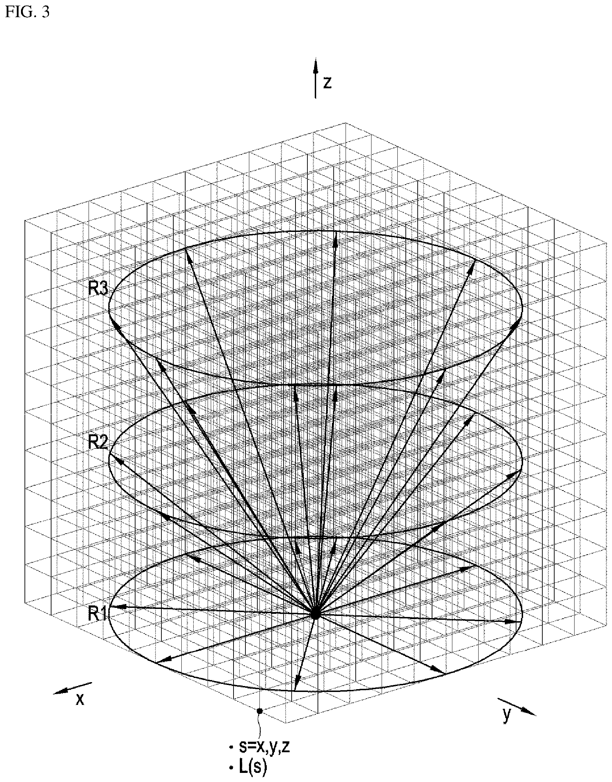

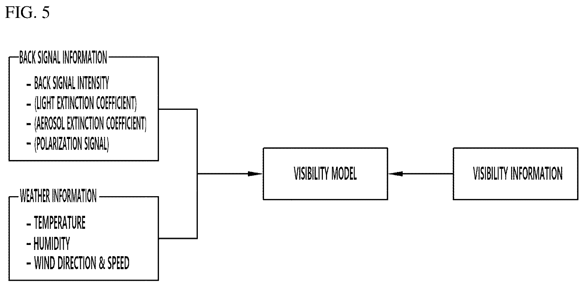

The present invention generates a visibility model to compute visibility information. A method for generating a visibility model according to the present invention will be described with reference to FIGS. 3 and 5.

First, the transceiving device 10 radiates electromagnetic waves in all three-dimensional directions to acquire data for generating a visibility model. When the radiated electromagnetic waves are reflected or scattered from the substances in the air, a back signal is generated, and the transceiving device 10 receives the back signal and transmits the received signal to the back signal information acquisition module 111. The back signal information acquisition module 111 may acquire back signal information (L(s)) including the intensity of the back signal based on the received back signal.

It is to be noted that the transceiving device 10 radiates the electromagnetic waves in all three-dimensional directions. Referring to FIG. 3, the electromagnetic waves are radiated in all three-dimensional directions centered on the position of the transceiving device 10, and a back signal is received.

Any method for irradiating electromagnetic waves in all three-dimensional directions may be used. For example, after irradiating the electromagnetic waves in all radial directions, the radial irradiation may be repeated while changing the altitude angle of transmission and reception up to a preset range. As shown in FIG. 3, irradiation may be performed at a horizontal height first in the radial direction R1, which is the entire radial direction, and then irradiation may be repeated several times in directions R2, R3, etc., while changing the transmission/reception altitude angle based on a predetermined unit.

Since the transceiving device 10 radiates the electromagnetic waves in all three-dimensional directions, the back signal information L(s) is acquired for each position coordinates (s) at all position coordinates (s). Note that the signals will be acquired from the position coordinates (s) within a three-dimensional limit range preset by the irradiation characteristics of the transceiving device 10, rather than infinite position coordinates (s). In the example shown in FIG. 3, the maximum value of the grid is the limit range, and the back signal information (L(s)) is individually acquired for each position coordinates (s).

The acquired back signal information (L(s)) is stored in the back signal information database 210. Therefore, by inputting the position coordinates (s) into the back signal information database 210, the user may confirm the back signal information (L(s)) for the corresponding position coordinates (s).

Next, the visibility information acquisition module 113 acquires the actual visibility information using the position of the transceiving device 10 (center position in FIG. 3) as a reference position (s0).

Then, as shown in FIG. 5, the visibility model generation module 114 generates a visibility model using the previously acquired back signal information (L(s)) for each position coordinates (s) as an input variable and the actual visibility information as an output variable. Generating a model may be performed through artificial intelligence including machine learning, or through various learning algorithms such as regression analysis.

In an embodiment of the present invention, the back signal information L(s), which is an input variable, may further include a light extinction coefficient, an aerosol extinction coefficient, and a polarization signal in addition to the intensity of the back signal.

The back signal information acquisition module 111 may compute the light extinction coefficient, the aerosol extinction coefficient, and the polarization signal using the back signal acquired from the transceiving device 10. Since each computation method is already a known technology, a detailed description thereof will be omitted. Alternatively, a separate measuring device that directly measures the light extinction coefficient, the aerosol extinction coefficient, and the polarization signal may be used.

In this way, if learning is done using the light extinction coefficient, the aerosol extinction coefficient, and the polarization signal in addition to the intensity of the back signal, the accuracy of the model is further increased.

In another embodiment of the present invention, weather information may be further used as an input variable.

The weather information acquisition module 112 acquires actual weather information on the position of the transceiving device 10 (or a position nearby where the weather information is confirmed) and uses the acquired information as an input variable along with the back signal information (L(s)) to generate a visibility model. The weather information may be acquired from the Korea Meteorological Administration's weather information database 230, or may be directly measured using a separate weather station, or may be measured by a Doppler transceiving device and a telemetry transceiving device included in the transceiving device 10. For example, the weather information may include temperature, humidity, and wind direction and speed, each of which may be confirmed using the weather information database 230 or a separate weather station, or may be confirmed from the Doppler transceiving device included in the transceiving device 10 that can confirm wind direction and wind speed and the telemetry transceiving device that can confirm temperature and humidity.

In this way, if the model is trained using more weather information in addition to the back signal information (L(s)), the accuracy of the model increases.

In another embodiment of the present invention, when the back signal information (L(s)) is unclear or when there are missing position coordinates (L(s)), the back signal information acquisition module 111 may estimate and confirm the back signal information (L(s)) of the corresponding position coordinates (s) by interpolation using the back signal information (L(s)) of the adjacent coordinates.

### 3. Description of Method For Computing Visibility Information Using Visibility Model

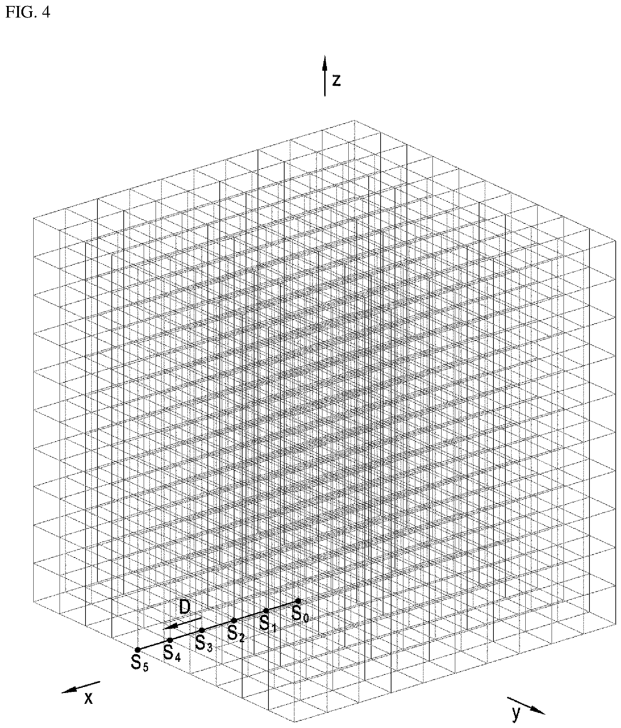

Once the visibility model is generated according to the method described above, the visibility information can be confirmed by entering the position coordinates (s) and the direction (D) to the model. The coordinates of the position where visibility information is to be confirmed are referred to herein as the reference coordinates (s0). This will be described with reference to FIG. 4.

Once the visibility model is generated, when the transceiving device 10 installed at or near the position where the actual visibility information is to be confirmed radiates electromagnetic waves in three-dimensional directions, the back signal information acquisition module 111 acquires the back signal information (L(s)) for each position coordinates (s) within a preset three-dimensional limit range. The method for acquiring the back signal information (L(s)) is similar to the method used for generating the visibility model.

Then, the reference coordinates (s0) which are the position from which the visibility information is to be confirmed, and the direction (D) along which the visibility information is to be confirmed, are input to the visibility information computation module 121. In FIG. 4, s0 is shown as the reference coordinates and D is shown as the direction. In the example shown in FIG. 4, the coordinates of s0 are (0, 0, 0) and D is the same as the x-axis direction.

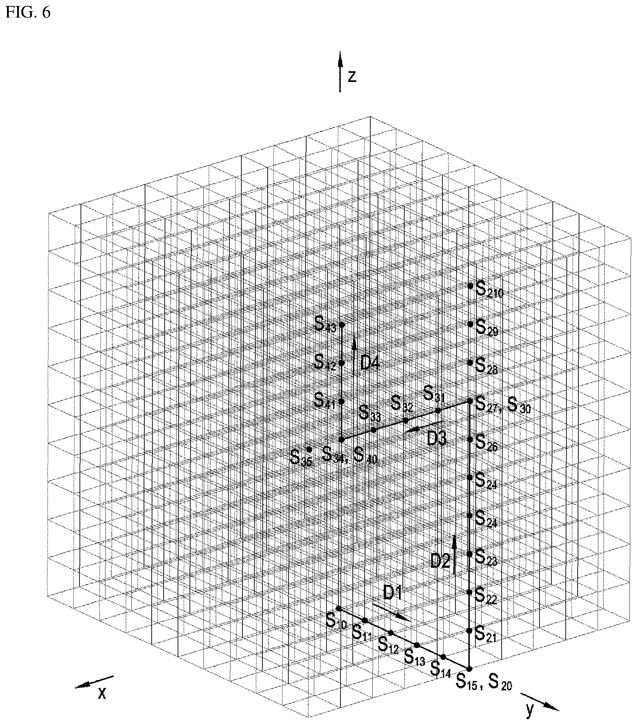

The visibility information computation module 121 confirms the position coordinates (s), starting from the reference position (s0) and proceeding along all the position coordinates (s) in the input direction (D). Since the back signal information (L(s)) for each position coordinates (s) stored in the back signal information database 210 is valid only within the measured three-dimensional limit range, the position coordinates (s) are not infinite. In the example of FIG. 4, 6 position coordinates (s) of s0, s1, s2, s3, s4, and s5 will be confirmed. In a three-dimensional coordinates system, (0, 0, 0), (1, 0, 0), (2, 0, 0), (3, 0, 0), (4, 0, 0), and (5, 0, 0) are the 6 coordinates.

Then the visibility information computation module 121 confirms the back signal information (L(s)) corresponding to the previously confirmed position coordinates (s), and inputs the confirmed information into the visibility model so as to compute the visibility information in the corresponding direction (D). That is, the visibility information from the input reference coordinates (s0) in the input direction (D) is computed.

It can be noted that the visibility information computed as described above takes the direction (D) into consideration. If the direction (D) changes, the selected position coordinates (s) change and the back signal information (L(s)) changes accordingly, so that different visibility information is computed. In the example shown in FIG. 4, when the direction D is the x-axis direction, the position coordinates of (0, 0, 0), (1, 0, 0), (2, 0, 0), (3, 0, 0), (4, 0, 0) and (5, 0, 0) are confirmed, but if the direction is 45 degrees between the x and z axes, the position coordinates of (0, 0, 0), (1, 0, 1), (2, 0, 2), (3, 0, 3), (4, 0, 4), and (5, 0, 5) will be confirmed, and the back signal information (L(s)) corresponding to the coordinates changes and different visibility information is computed. (Of course, if the back signal information (L(s)) of the corresponding position coordinates (s) is the same as the example shown in FIG. 4, the same visibility information may be computed.) Therefore, compared to the related art that provides visibility information based on a specific position without considering the direction (D), it is possible to provide the visibility information with significantly increased accuracy that is specialized for the direction (D).

As can be seen through this example, the position of the transceiving device 10 does not need to be the same as the reference position (s0) from which the visibility information is to be confirmed. In the example shown in FIG. 4, the coordinates of the reference position (s0) may not be (0, 0, 0) but may be any other coordinates, and no matter what direction (D) is applied, the position coordinates (s) that should be input to the visibility model are confirmed.

In addition, if the back signal information (L(s)) for virtually all atmospheres has been confirmed by utilizing a sufficient number of transceiving devices 10 to generate a visibility model such that there is no limit range, the number of position coordinates (s) in the corresponding direction (D) to be input into the visibility model may be arbitrarily set. For example, it may be set such that, when the reference position (s0) and direction (D) are input, only 100 of the position coordinates (s) starting from the reference position (s0) and proceeding in the corresponding direction (D) are confirmed and input into the visibility model.

Another example will be described with reference to FIG. 6. The example shown in FIG. 6 illustrates an example where the visibility information is confirmed based on the assumption that the mobility 30 is moving.

The mobility 30 is intended to start from the reference coordinates (s10) and move sequentially in the y-axis direction (D1), the z-axis direction (D2), the x-axis direction (D3), and the z-axis direction (D4).

In the movement in the D1 direction, 6 coordinates of position coordinates s10, s11, s12, s 13, s14, and s 15 are confirmed up to the limit range, where s10 is the reference coordinates and D1 is the direction. By inputting the result into the visibility model, the visibility information from the s 10 position in the D1 direction is computed.

Then, in the movement in the D2 direction, 11 position coordinates from s20 to s210 are confirmed up to the limit range, where s20 is the reference coordinates (which is the same as s15) and D2 is the direction. By inputting the result into the visibility model, the visibility information from the s20 position in the D2 direction is computed.

Likewise, in the movement in the D3 direction, 6 coordinates from s30 to s35 are confirmed and input into the visibility model, such that the visibility information from the s30 position in the D3 direction is computed, and in the movement in the D4 direction, 4 coordinates from s40 to s43 are confirmed and input into the visibility model such that the visibility information from the s40 position in the D4 direction is computed.

In this way, when the mobility 30 is about to move, the visibility information from a specific position in a specific direction may be confirmed along each route, and real-time computation is possible even while moving.

Meanwhile, as described in the embodiment of the present invention described above, the same method may be used for computing even when the back signal information (L(s)), which is an input variable, further includes the light extinction coefficient, the aerosol extinction coefficient, and the polarization signal in addition to the intensity of the back signal.

When the additional weather information is used, as described in another embodiment of the present invention above, the weather information acquisition module 112 should further acquire weather information on the reference position (s0), which is the position from which the visibility information is to be confirmed, and input the acquired result into the visibility model. When it is difficult to acquire the weather information at the exact reference position (s0), the weather information from the adjacent position from which the information can be acquired is input. More accurate visibility information computation is possible by inputting the weather information.

### 4. Application Technology of Method According to Present Invention

The method according to the present invention enables real-time accurate visibility information computation from a specific position in a specific direction and may be applied to various fields.

### 4.1 Provision of Visibility Information for Each Position

While the related visibility information does not reflect different visibility information for each position, the method according to the present invention accurately computes and provides different visibility information for each more detailed position and direction. For example, with reference to FIG. 2, the visibility information may be provided for each preset unit value which is the interval of coordinates. Therefore, it is possible to provide more accurate position-specific visibility information by printing it on a map. At this time, when the user inputs a direction, the visibility information for the input direction is provided at each position, and when the user changes to another direction, the visibility information for that direction is provided.

### 4.2 Route Guidance in Navigation System

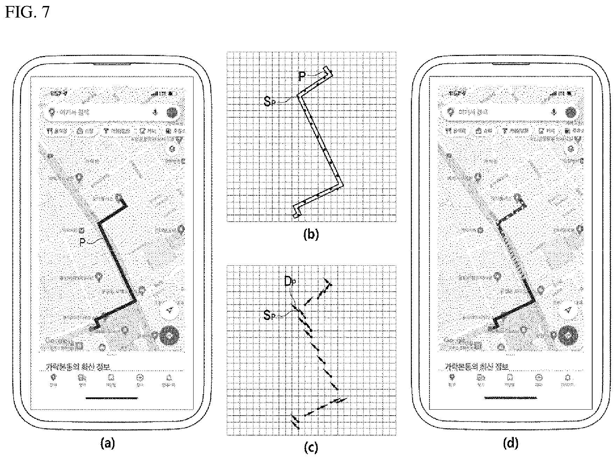

The visibility information can be provided according to the position and direction, and applied to the route in the navigation system 20, and as a result, a route with good visibility can be provided. This will be described in more detail with reference to FIG. 7.

As shown in FIG. 7A, the route (P) and the route direction (Dp0) have been computed through the navigation system 20 according to the related art. The route direction (Dp0) is confirmed using a starting point and a destination point. In the example of FIG. 7A, it is the direction advancing from the bottom right to the top left.

The route (P) and the route direction (Dp0) computed as described above are input to the route data computation module 131 of the control unit 100 of the system of the present invention. When the route (P) and the route direction (Dp0) are input, the route data computation module 131 confirms the route position coordinates (Sp) forming the route (P) and additionally uses the input route direction (Dp0) to confirm the movement direction (Dp) in each route position coordinates (Sp). The movement direction (Dp) will be the direction the driver faces from that point.

In this example, a range value (e.g., 100 m), which is the interval of the position coordinates (s), is used. As shown in FIG. 7A, a grid with a preset range value is projected onto the set route P, and position coordinates (s) corresponding to the route (P) or within a predetermined distance from the route (P) are confirmed and applied as the route position coordinates (Sp). This is shown in FIG. 7B. In addition, considering the route direction (Dp0) in each route position coordinates (Sp), each movement direction (Dp) may be confirmed. This is shown in FIG. 7C together. In the example shown in FIG. 7C, a total of 19 route position coordinates (Sp) and the movement direction (Dp) for each may be confirmed.

These 19 route position coordinates (Sp) and the movement directions (Dp) are applied as the reference positions (s0) and the directions (d), respectively, and are input to the previously created visibility model, whereby the visibility information in each route position coordinates (Sp) is computed.

The visibility information computed by the output module 133 is output along with the route. The output may be in the form of numbers, or as shown in FIG. 7D, a color or pattern (hatched or dot pattern, etc.).

Meanwhile, in FIG. 7D, the example where the car is driving in two dimensions is explained as an example, but since the z-axis is set as a variable, it will be appreciated that the visibility information can be computed according to changes in altitude and applied to aircraft such as UAM.

In an embodiment of the present invention, the low visibility warning module 132 may issue a warning by determining whether the value of visibility information in each route position coordinates (Sp) is below a preset lower limit. In the case of the output as shown in FIG. 7D, the output module 133 may warn of a low visibility position.

The route data computation module 131, the low visibility warning module 132, and the output module 133 may be positioned in the navigation system 20 located in the mobility 30, and in this case, the mobility 30 will receive the visibility information from the control unit 100 through the communication module 190, then perform computation on its own and output the visibility information and a low visibility warning along with the route P, as shown in FIG. 7D.

A method is also possible, which recommends a route with better visibility when the navigation system 20 suggests two or more different routes. For example, the low visibility warning module 132 may determine whether the value of visibility information at each route position coordinates (Sp) for each of two or more routes (P) is below a preset lower limit, and the output module 133 may output, as the low visibility route, a route including route position coordinates (Sp) for which it is determined to be below the lower limit. Alternatively, it may be possible that routes with severely poor visibility are not suggested.

### 4.3 Autonomous Driving Warning

When the mobility 30 is equipped with an autonomous driving function based on information detected by an RGB camera, a small Lidar, or a Radar device, a warning may be given in the low visibility conditions when the autonomous driving errors are likely to occur.

That is, the low visibility warning module 132 may determine whether the value of visibility information in each route position coordinates (Sp) is equal to or less than the preset lower limit, and if it is determined to be equal to or less than the lower limit, the output module 133 may warn of an autonomous driving error for the corresponding route position coordinates (Sp).

## Claims

1. A method for generating a visibility model using a transceiving device 10 and computing visibility information using the visibility model, wherein the transceiving device radiates electromagnetic waves into the atmosphere and receives a back signal returned from substances in the atmosphere,
back signal information (L(s)) includes intensity of the back signal at position coordinates (s), and the position coordinates (s) are three-dimensional coordinates divided into preset unit values, and the method comprises steps of:
(a1) when the transceiving device 10 radiates the electromagnetic waves in all three-dimensional directions and receives a back signal, acquiring, by a back signal information acquisition module (111) electrically connected thereto, back signal information (L(s)) for each position coordinates (s) within a preset three-dimensional limit range;
(b1) acquiring, by a visibility information acquisition module 113, actual visibility information at a position of the transceiving device 10; and
(c1) generating, by a visibility model generation module 114, a visibility model by using the back signal information (L(s)) for each position coordinates (s) acquired in the step (a1) as an input variable and using the visibility information acquired in the step (b1) as an output variable.

2. The method according to claim 1, wherein the transceiving device 10 is a Lidar device and the back signal is a backscattered signal, or the transceiving device 10 is a Radar device and the back signal is an echo signal.

3. The method according to claim 2, wherein the step (a1) further comprises:
(a11) acquiring, by the back signal information acquisition module 111, an intensity of the back signal included in the back signal information (L(s)) for each position coordinates (s); and
(a12) computing, by the back signal information acquisition module 111, a light extinction coefficient, an aerosol extinction coefficient, and a polarization signal using the acquired back signal, wherein the computed light extinction coefficient, aerosol extinction coefficient, and polarization signal are included in the back signal information (L(s)).

4. The method according to claim 1, further comprising, after the step (a1), (a2) acquiring, by a weather information acquisition module 112, weather information on a position of the transceiving device 10,
wherein the step (c1) includes (c2) generating, by the visibility model generation module 114, a visibility model by using the back signal information (L(s)) for each position coordinates (s) acquired in the step (a1) and the weather information acquired in the step (a2) as input variables and using the visibility information acquired in the step (b1) as an output variable.

5. The method according to claim 4, wherein the transceiving device 10 includes a Doppler transceiving device that detects wind direction and speed and a telemetry transceiving device that remotely measures temperature and humidity,
the weather information includes temperature, humidity, and wind direction and speed, and
the temperature, humidity, and wind direction and wind speed are confirmed from a weather information database 220, or confirmed from a weather station, or confirmed from a telemetry transceiving device and a Doppler transceiving device.

6. The method according to claim 1, after the step (c1), comprising:
(d1) when one or more of the transceiving devices 10 radiate electromagnetic waves in all three-dimensional directions and receive a back signal, acquiring, by the back signal information acquisition module (111) electrically connected thereto, back signal information (L(s)) for each position coordinates (s) within a preset three-dimensional limit range;
(e1) when reference coordinates (s0) and a direction (D) are input to a visibility information computation module 121, confirming, by a position coordinate confirmation module 122, a plurality of position coordinates (s) to pass while advancing, starting from the reference position (s0), in the input direction (D);
(f1) confirming, by the visibility information computation module 121, back signal information (L(s)) corresponding to each of the plurality of position coordinates (s) confirmed in the step (e1); and
(g1) additionally inputting, by the visibility information computation module 121, the back signal information (L(s)) confirmed in the step (f1) into the visibility model generated in the step (c1), thereby computing visibility information for the input reference coordinates (s0) in the input direction (D).

7. The method according to claim 6, comprising:
(A) when a route (P) and a route direction (Dp0) are input to a route data computation module 131, confirming, by the route data computation module 131, route position coordinates (Sp) forming the route (P) and confirming a movement direction (Dp) in each route position coordinates (Sp) by further using the input route direction (Dp0), thereby confirming the route position coordinates (Sp) and the movement direction (Dp); and
(B) computing, by the visibility information computation module 121, the visibility information using the route position coordinates (Sp) as the reference coordinates (s0) in each route position coordinates (Sp) and using the movement direction (Dp) as the direction (D), thereby computing the visibility information at each route position coordinates (Sp) included in the route (P) and providing the result.

8. The method according to claim 7, further comprising, after the step (B), (C1) outputting, by the output module 132, the route (P) together with the visibility information at each route position coordinates (Sp) confirmed in the step (B).

9. The method according to claim 7, further comprising, after the step (B), (C2) determining, by the low visibility warning module 132, whether a value of the visibility information at each route position coordinates (Sp) confirmed in the step (B) is equal to or less than a preset lower limit, and when it is determined to be equal to or less than the preset lower limit, warning, by the output module 133, of low visibility for the route position coordinates (Sp) corresponding thereto.

10. The method according to claim 9, wherein
the route data computation module 131, the low visibility warning module 132, and the output module 133 are provided in a mobility 30,
the mobility 30 includes an autonomous driving function, and
the step (C2) further includes (C21) determining, by the low visibility warning module 132, whether a value of the visibility information at each route position coordinates (Sp) confirmed in the step (B) is equal to or less than the preset lower limit, and when it is confirmed to be equal to or less than the preset lower limit, warning, by the output module 133, of an autonomous driving error for the route position coordinates (Sp) corresponding thereto.

11. The method according to claim 10, wherein
the mobility 30 includes a navigation system 20,
the step (a) includes (A1) computing, by the navigation system 20, two or more routes (P) and the route direction (Dp0), and inputting the route (P) and the route direction (Dp0) to the route data computation module 131, and
the step (b) includes (B1) computing, by the visibility information computation module 121, the visibility information in the route position coordinates (Sp) included in each of the two or more routes (P),

12. The method according to claim 10, further comprising, after the step (B 1), (C3) determining, by the low visibility warning module 132, whether the value of the visibility information at each route position coordinates (Sp) for each of the two or more routes (P) confirmed in the step (B1) is equal to or less than the preset lower limit, and outputting, by the output module 133, a route including the route position coordinates (Sp) confirmed to be equal to or less than the preset lower limit as a low visibility route.
